# EUROPÄISCHE PATENTANMELDUNG

(11) **EP 0 560 334 A1**
(43) Veröffentlichungstag der Anmeldung: **15.09.1993**
(21) Anmeldenummer: 93103869.9
(22) Anmeldetag: 10.03.1993
(51) Int. Cl.: H04N 1/32

(54) **Umschalter für einen Telefonanschluss**

(30) Priorität: 10.03.1992 DE 4207476
(71) Anmelder: BTR BLUMBERGER TELEFON- UND RELAISBAU ALBERT METZ, D-78176 Blumberg (DE)
(72) Erfinder: Wolpert, Christoph, Dipl.-Ing., W-7712 Blumberg (DE)
(74) Vertreter: Patentanwälte Westphal, Buchner, Mussgnug Neunert, Göhring

(57) **Zusammenfassung**

Es wird ein Telefax-Telefon-Umschalter beschrieben, der das Anschließen eines Telefons und eines Telefax-Gerätes an einen gemeinsamen Amtsanschluß erlaubt. Der Umschalter unterscheidet ankommende Telefax- und Telefon-Verbindungen automatisch und signalisiert die anstehende Verbindung jeweils automatisch an das zutreffende Endgerät. Während der Überprüfung der ankommenden Verbindung und der Signalisierung hält der Umschalter die Verbindung und schaltet diese zu dem Endgerät durch, wenn sich dieses an die Leitung schaltet. Der Telefax-Telefon-Umschalter kann mit einem automatischen Mehrfach-Schalter kombiniert sein, so daß zwei oder mehr Telefone oder sonstige Endgeräte angeschlossen werden können.

## Beschreibung

Die Erfindung betrifft einen Umschalter für einen Telefonanschluß gemäß dem Oberbegriff des Anspruchs 1.

Häufig werden an denselben Telefonanschluß sowohl ein Telefon-Gerät als auch ein Telefax-Gerät angeschlossen. Mit einem handbedienten Umschalter kann eine ankommende Verbindung wahlweise an das Telefon-Gerät oder an das Telefax-Gerät geleitet werden. Nachteilig ist dabei, daß der Benutzer bei jedem ankommenden Ruf zunächst den Hörer des Telefon-Gerätes abnehmen muß, um zwischen einem ankommenden Ferngespräch und einer ankommenden Telefax-Übermittlung zu unterscheiden und den Umschalter entsprechend zu bedienen.

Weiter sind automatische Mehrfach-Schalter (AMS) bekannt, die das Anschalten mehrerer Telefone an einen Telefonanschluß ermöglichen und ankommende Verbindungen automatisch an das Telefon leiten, bei welchem der Hörer abgenommen wird.

Der Erfindung liegt das Problem zugrunde, einen Umschalter für einen Telefonanschluß zu schaffen, der den Betrieb von Telefon und Telefax an einem Telefonanschluß für den Benutzer komfortabler macht.

Dieses Problem wird erfindungsgemäß gelöst durch einen Umschalter mit den Merkmalen des Anspruchs 1.

Vorteilhafte Ausführungsformen der Erfindung sind in den Unteransprüchen angegeben.

Der erfindungsgemäße Umschalter schaltet ankommende Verbindungen automatisch jeweils auf das richtige Endgerät, d.h. Telefax- oder Telefon-Gerät um. Hierzu ermittelt der Umschalter, ob es sich bei der ankommenden Verbindung um eine Telefon-Verbindung oder eine Telefax-Verbindung handelt. Eine ankommende Telefax-Verbindung wird an das Telefax-Gerät durchgeschaltet, ohne daß ein störendes Rufsignal ertönt. Das Telefon läutet nur dann, wenn die ankommende Verbindung eine Fernsprech-Verbindung ist.

Bei einem ankommenden Ruf übernimmt der Umschalter nach dem ersten Rufsignal die Verbindung und belegt den Anschluß. Der Umschalter überprüft die Amtsleitung auf das Telefax-Erkennungssignal, insbesondere auf das CNG-Signal, das von Telefax-Geräten im Vier-Sekunden-Takt gesendet wird. Wird das Telefax-Erkennungssignal erkannt, so sendet der Umschalter Rufsignale zum Telefax-Gerät, durch welche dieses in den Empfangszustand eingeschaltet wird. Wird bei der Überprüfung der Amtsleitung kein Telefax-Erkennungssignal festgestellt, so wird nach einer für die Erkennung ausreichenden Verzögerung (von z.B. vier Sekunden für die Erkennung des CNG-Signals), der Ruf an das Telefon signalisiert. Falls eine Telefax-Übermittlung von einem Telefax-Gerät kommt, welches kein CNG-Signal sendet, wird dementsprechend die ankommende Verbindung ebenfalls an das Telefon durchgeschaltet. Der Teilnehmer nimmt den Hörer ab, wodurch zunächst eine Telefon-Verbindung zustandekommt. Auf eine entsprechende telefonische Ankündigung der Telefax-Übermittlung durch den anrufenden Teilnehmer kann der angerufene Teilnehmer sein Telefax-Gerät manuell oder in sonstiger geeigneter Weise aktivieren.

Anstelle eines Anschlusses für nur ein Telefon-Gerät kann auch ein automatischer Mehrfach-Schalter integriert sein, so daß zwei Telefone und ggf. weitere Endgeräte, wie z.B. Anrufbeantworter, angeschlossen werden können. Der automatische Mehrfach-Schalter stellt die Verbindung an dem Telefon her, bei welchem der Hörer zunächst abgenommen wird. Der automatische Mehrfach-Schalter ermöglicht auch die Weitergabe der bestehenden Telefon-Verbindung von einem Telefon auf das andere.

Während der Umschalter die ankommende Verbindung an das Telefon oder über den AMS an die Endgeräte signalisiert, hält der Umschalter die Verbindung und schaltet diese dann zu dem Telefon oder einem sonstigen an den AMS angeschalteten Endgerät durch, wenn sich dieses an die Leitung schaltet. Da die ankommende Verbindung bereits durch die Ruferkennung des Umschalters aufgebaut ist, wird der anrufende Teilnehmer während der Dauer, in welcher der Umschalter den ankommenden Ruf dem Telefon signalisiert, entsprechend den postalischen Bestimmungen durch eine Ansage darauf hingewiesen, daß die Verbindung zu dem Telefon noch nicht zustandegekommen ist.

Ist der Umschalter mit einem automatischen Mehrfach-Schalter kombiniert, so sind vorzugsweise wesentliche Funktionseinheiten der Schaltung sowohl für den Umschalter als auch für den automatischen Mehrfach-Schalter einsetzbar. Dadurch ergibt sich eine wesentliche Kosteneinsparung.

Der Telefax-Telefon-Umschalter und der automatische Mehrfach-Schalter für den Anschluß mehrerer Telefone sind vorzugsweise in einem gemeinsamen Gehäuse untergebracht. Der Umschalter wird einerseits zur Stromversorgung an eine Steckdose des Stromnetzes und andererseits an eine Anschlußdose (TAE-Dose) des Fernsprechnetzes angeschlossen.

Im folgenden wird die Erfindung anhand eines in der Zeichnung dargestellten Ausführungsbeispiels näher erläutert. Es zeigen
- Figur 1: ein Blockschaltbild des Telefax-Telefon-Umschalters mit automatischem Mehrfach-Schalter und
- Figuren 2a,b: den Stromlaufplan des Umschalters der Figur 1.

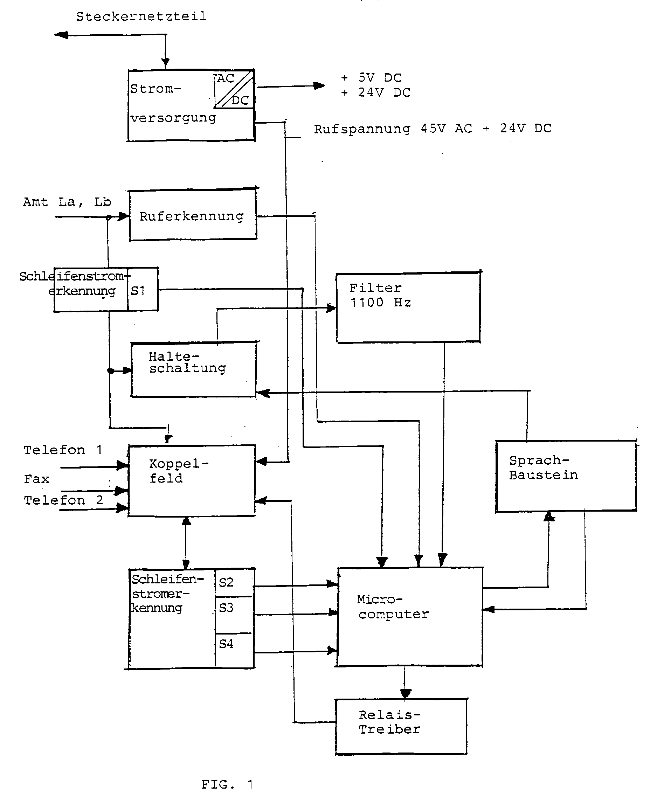

Das dargestellte Ausführungsbeispiel zeigt einen Telefax-Telefon-Umschalter, der mit einem automatischen Mehrfach--Schalter für zwei Telefone vereinigt ist. Wie das Blockschaltbild der Figur 1 zeigt, sind folgende Funktionsblöcke vorgesehen:
1. Eine Stromversorgung, die die Speisespannungen erzeugt.
2. Eine Ruferkennung, die einen ankommenden Ruf feststellt.
3. Eine Halteschaltung, die die ankommende Verbindung aufrechterhält, bis diese als Telefax oder Ferngespräch erkannt ist und sich das entsprechende Endgerät eingeschaltet hat.
4. Ein Koppelfeld, welches gesteuert jeweils das Telefax-Gerät oder die Telefone an die Amtsleitung anschließt.
5. Eine Schleifenstromerkennung S1, die einen Mikrocomputer aktiviert, wenn ein Schleifenstrom in der Amtsleitung fließt.
6. Eine Schleifenstromerkennung S2, S3, S4. Die Schleifenstromerkennung S2 liegt im Stromweg der Rufspannung und zeigt an, wenn die eingeschalteten Geräte Schleife bilden, während die Rufspannung anliegt. Die Schleifenstromerkennung S3 signalisiert dem Mikrocomputer, wenn das Telefon 1 oder das Telefon 2 Schleife bilden, während die Schleifenstromerkennung S4 dem Mikrocomputer signalisiert, wenn das Telefax-Gerät Schleife bildet.
7. Ein Mikrocomputer, der sämtliche Vorgänge des Telefax-Telefon-Umschalters und des automatischen Mehrfach-Schalters steuert.
8. Ein Relaistreiber, der durch den Mikrocomputer gesteuert, die Relais schaltet.
9. Ein 1100-Hz-Filter, der das Telefax-Erkennungssignal CNG auswertet.
10. Ein Sprachbaustein, der Ansagetexte einspeichert und in die Amtsleitung einspeisen kann.

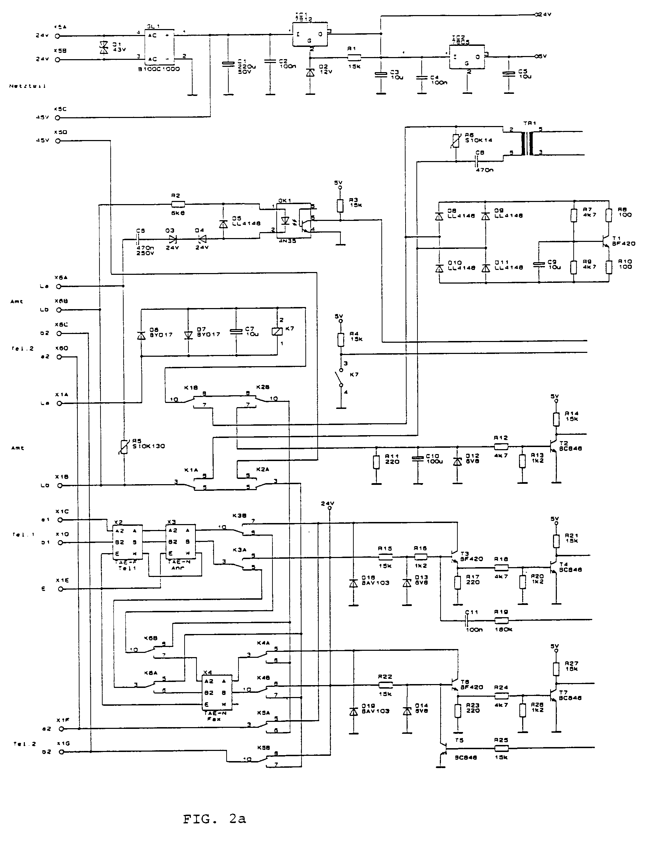

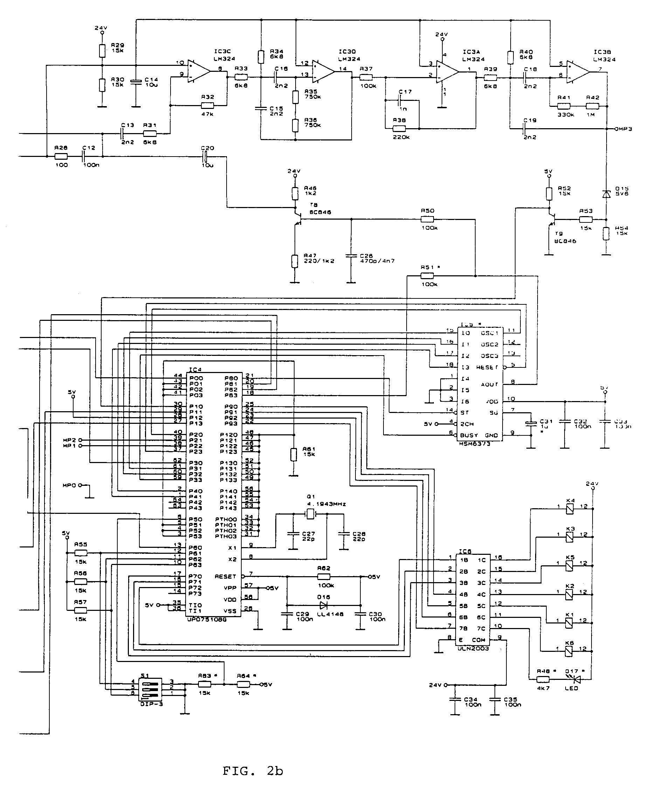

Im folgenden wird der Aufbau der einzelnen Funktionsblöcke anhand des detaillierten Stromlaufplanes der Figur 2 näher erläutert. Soweit einzelne Elemente der Schaltung nachfolgend nicht besonders erwähnt sind, handelt es sich um an sich bekannte Schaltungsmaßnahmen, die dem Fachmann in ihren Eigenschaften aus dem Stromlaufplan ohne weiteres ersichtlich sind.

### 1. Stromversorgung

Ein in dem Stromlaufplan nicht dargestelltes Steckernetzteil wird in eine Steckdose des Stromnetzes (230 V, 50 Hz) eingesteckt. Das Steckernetzteil liefert die Rufwechselspannung von 45 V für die interne Rufspannung und eine Wechselspannung von 24 V zur Erzeugung der erforderlichen Betriebsspannungen. Das Steckernetzteil sorgt für die sichere Trennung der Netzspannung von der Betriebsspannung für die Elektronik der Schaltung und der angeschlossenen Endgeräte, die intern gespeist werden. Der Transformator des Steckernetzteils ist durch eine Thermosicherung vor Überhitzung und durch zwei Kaltleiter vor Überlast geschützt. Ein Varistor an der Rufwechselspannung schützt die Schaltung vor Spannungsspitzen. Das in die Steckdose einsteckbare Steckernetzteil ist vorzugsweise über ein vieradriges Anschlußkabel und einen Steckverbinder mit der Leiterplatte verbunden, die die in dem Stromlaufplan gezeigte Schaltung trägt und in einem Gehäuse angeordnet ist, das beispielsweise als Aufputzdose montierbar ist.

Neben der von dem Steckernetzteil gelieferten Rufwechselspannung von 45 V benötigt die Schaltung eine Gleichspannung von 24 V für die interne Speisung der Telefone und des Telefax-Gerätes, solange diese nicht mit dem Amt verbunden sind, und eine Gleichspannung von 5 V für die Versorgung des Mikrocomputers.

Zur Erzeugung der Gleichspannung von 24 V richtet ein Brückengleichrichter GL1 die von dem Steckernetzteil gelieferte Wechselspannung von 24 V gleich. Der Eingang des Brückengleichrichters GL1 ist durch eine bipolare Z-Diode D1 überbrückt, wodurch die elektronischen Bauteile vor Überspannung geschützt sind. Ein Ladekondensator C1 begrenzt die Welligkeit der durch den Brückengleichrichter GL1 gleichgerichteten Spannung. Ein 12 V-Spannungsregler IC1, dessen Fußpunkt durch eine Z-Diode D2 und einen Widerstand R1 um 12 V hochgelegt ist, erzeugt aus der gleichgerichteten Spannung eine geregelte Gleichspannung von 24 V.

Aus der geregelten Gleichspannung von 24 V erzeugt ein Spannungsregler IC2 die Gleichspannung von 5 V für den Mikrocomputer.

Der eine Pol der Rufwechselspannung von 45 V ist mit der ungeregelten Gleichspannung von + 24 V verbunden. Bei eingeschaltetem Ruf ist die Rufwechselspannung mit dieser ungeregelten Gleichspannung von 24 V überlagert.

### 2. Ruferkennung

Zur Erkennung eines an der Amtsleitung La, Lb ankommenden Rufes ist in die Amtsleitung La, Lb ein Optokoppler OK1 in Reihe mit einem Kondensator C6, Dioden D3 und D4 und einen Widerstand R2 geschaltet. Bei einem anliegenden Ruf erscheint an einem Widerstand R3 am Ausgang des Optokopplers OK1 eine Rechteckspannung, welche dem Mikrocomputer zur Erkennung der Ruffrequenz zugeführt wird. Der Optokoppler OK1 sorgt für eine galvanische Trennung von der Amtsleitung La, Lb, d.h. vom Fernmeldenetz. Eine den Eingang des Optokopplers OK1 überbrückende Diode D5 schützt diesen vor Verpolung. Die Elemente C6, D3, D4 und R2 sind entsprechend der FTZ-Richtlinie 1TR2 dimensioniert. Ein zwischen die Amtsleitungen La und Lb geschalteter Varistor R5 schützt die Bauteile der Ruferkennung vor Überspannungen.

### 3. Halteschaltung

Ein Relais K1 schaltet die nachfolgend beschriebene Halteschaltung in die Amtsleitung La, Lb und trennt diese zweipolig von dem später beschriebenen Koppelfeld ab. Die Halteschaltung besteht aus einem Gleichstromweg und einem Wechselstromweg, die von einander getrennt ausgeführt sind. Die Trennung der beiden Stromwege ermöglicht die Anpassung entsprechend den Forderungen der FTZ-Richtlinie 1TR2, nämlich Gleichstromwiderstand 300 - 470 Ohm und Wechselstromwiderstand = Z_{R}.

Der Gleichstromweg ist über einen Brückengleichrichter aus Dioden D8, D9, D10 und D11 polungsunabhängig an die Amtsleitung La, Lb geschaltet. Am Ausgang des Brückengleichrichters D8 - D11 liegt in Reihe zwischen Widerständen R8 und R10 ein Transistor T1. Ein Spannungsteiler R7, R9 ist so dimensioniert, daß die Summe der Widerstände von R8, R10 und der Kollektor-Emitterstrecke des Transistors T1 im Bereich von 300 - 400 Ohm liegen. Ein Kondensator C9 an der Basis des Transistors T1 siebt die Wechselspannungsanteile des Spannungsteilers R7, R9 aus, so daß kein Wechselstrom durch den Transistor T1 fließt.

Parallel zu dem Gleichstromweg liegt der Wechselstromweg mit einem Kondensator C8 und der Primärwicklung eines Transformators TR1 in der Halteschaltung. Auf der Sekundärseite des Transformators TR1 sorgen zwei RC-Glieder R28, C12 und R46, C20 für die Anpassung an Z_{R}. Der Transformator TR1 überträgt die Signale von der Amtsleitung La, Lb zu einem später beschriebenen 1100 Hz-Filter für die Auswertung des CNG-Signales zur Faxerkennung und außerdem die Sprachansage vom später beschriebenen Sprachbaustein zur Amtsleitung.

Ein den Eingang der Halteschaltung überbrückender Varistor R6 schützt die Bauelemente der Halteschaltung vor Überspannung.

### 4. Koppelfeld

Das Koppelfeld besteht aus Relais K2, K3, K4, K5 und K6 und verbindet die angeschlossenen Telefone und das Telefax-Gerät mit der Amtsleitung, der internen 24 V-Speisung oder der Rufwechselspannung. Im stromlosen Zustand (Notbetrieb) ist immer Telefon 1 an die Amtsleitung La, Lb geschaltet, während die anderen Geräte abgeschaltet sind. Im Ruhebetrieb, d.h. wenn alle Telefone aufgelegt sind und das Telefax-Gerät nicht aktiv ist, sind alle Geräte an die 24 V-Speisung geschaltet.

Zum Einschalten der Rufspannung schaltet das Relais K2 die mit der 24 V-Gleichspannung überlagerte Rufwechselspannung zu den Relais K3, K4, K5, welche getrennt die Rufwechselspannung an das Telefon 1, das Telefax-Gerät oder das Telefon 2 schalten. Ebenso schalten die Relais K3, K4, K5 die Amtsleitung über die Relais K2, K1 zu diesen Geräten durch.

Das Relais K6 schaltet das Telefon 1 im Sprechbetrieb in Reihe zum Telefax-Gerät, wenn dieses vierpolig angeschlossen ist. Diese Durchschleifung durch das Telefax-Gerät ermöglicht den manuellen Start des Telefax-Gerätes, wenn am Telefon 1 die Verbindung aufgebaut wurde.

In dem dargestellten Ausführungsbeispiel sind das Telefon 1 und das Telefax-Gerät über Buchsen X2 bzw. X4 steckbar anschließbar, während das Telefon 2 fest angeschlossen ist. In Reihe zu der Buchse X2 des Telefons 1 ist eine Buchse X3 geschaltet, mit welcher bei Bedarf ein Anrufbeantworter angeschlossen werden kann.

### 5. Schleifenstromerkennung S1

In die Amtsleitung La, Lb ist vor der oben beschriebenen Halteschaltung ein Schleifenstromrelais K7 geschaltet. Bei Schleifenstrom zieht das Schleifenstromrelais K7 an, so daß an einem Widerstand R4 ein Signal erzeugt wird, das an den Mikrocomputer geführt wird. Ein Kondensator C7 vermindert die Einfügungsdämpfung des Signalpegels über der Spule des Relais K7. Dioden D6 und D7 schützen den Kondensator C7 vor Überspannung.

### 6. Schleifenstromerkennung S2, S3, S4

Die Schleifenstromerkennung S2 liegt im Stromweg der Rufspannung und spricht an, wenn die eingeschalteten Geräte Schleife bilden, während die Rufwechselspannung anliegt. Die Rufwechselspannung liegt mit einem Pol an der ungeregelten Gleichspannung von 24 V und über den Ladekondensator C1 an Masse. Mit dem anderen Pol liegt die Rufwechselspannung über das Relais K2 und die Relais K3, K4, K5, über die Rufkreise der Endgeräte und über einen Widerstand R10, einen Kondensator C10 und eine Diode D12 ebenfalls an Masse. Bei eingeschaltetem Ruf fließt der Rufstrom über den Kondensator C10 ab, ohne daß ein Transistor T2 leitet. Bildet jedoch eines der Geräte während der Rufsignalisierung Schleife, lädt sich durch den einsetzenden Gleichstrom der Kondensator C10 auf und bringt über einen Spannungsteiler aus den Widerständen R12 und R13 den Transistor T2 in den leitenden Zustand. Der Spannungsabfall an dem Kollektorwiderstand R14 des Transistors T2 signalisiert dem Mikrocomputer diese Zustandsänderung.

Die Schleifenstromerkennung S3 signalisiert dem Mikrocomputer, wenn das Telefon 1 oder das Telefon 2 Schleife bilden. Beide Telefone sind über die Relais K3 oder K5 mit der 24 V Speisespannung verbunden. Der andere Pol liegt über einen Transistor T3 und einen Widerstand R17 an Masse. Der Transistor T3 wirkt in Verbindung mit einem Spannungsteiler R15, R16 und einer Diode D13 wie eine Konstantstromquelle. Bei einsetzendem Schleifenstrom an einem der Telefone bringt der Spannungsabfall über dem Widerstand R17 und einem Spannungsteiler R18, R20 einen Transistor T4 in den leitenden Zustand. Der Spannungsabfall an einem Kollektorwiderstand R21 des Transistors T4 signalisiert dabei dem Mikrocomputer den Schleifenzustand. Am intern gespeisten Telefon kann der Mikrocomputer Töne zu den Telefonen senden, welche der Mikrocomputer als Rechtecksignale über einen Kondensator C11 und einen Widerstand R19 in die von dem Transistor T3 gebildete Konstantstromquelle einspeist. Eine Diode D18 verhindert eine Polungsumkehr durch aufgeladene Weckerkondensatoren beim Abschalten der Rufphase.

Die Schleifenstromerkennung S4 signalisiert dem Mikrocomputer, wenn das Telefax-Gerät Schleife bildet. Die Schleifenstromerkennung S4 ist analog zur Schleifenstromerkennung S3 mit den Widerständen R22, R23, R24, R25, R26, R27, den Dioden D14 und D19 und den Transistoren T6 und T7 aufgebaut. Über einen Transistor T5 und einen Widerstand R25 kann der Mikrocomputer die interne Speisung für das Telefax-Gerät abschalten.

### 7. Mikrocomputer

Der Mikrocomputer IC4 steuert aller Vorgänge des Telefax-Telefon-Umschalters und des automatischen Mehrfach-Schalters, wie sie in der nachfolgenden Funktionsbeschreibung angegeben sind. An einem Codierschalter S1 können verschiedene Betriebsarten eingestellt werden. Neben der Steuerung des nachfolgend beschriebenen Sprachbausteines wertet der Mikrocomputer IC4 die Frequenzen der Rufwechselspannung des Amtes und des CNG-Signals zur Faxerkennung aus.

Das Programm für den Mikrocomputer IC4 ist in Form einer Ätzmaske fest programmiert.

### 8. Relaistreiber

Der Relaistreiber IC6 schaltet vom Mikrocomputer IC4 gesteuert die mit 24 V betriebenen Relais K1 - K6.

### 9. 1100 Hz-Filter

Zur Auswertung des CNG-Fax-Erkennungssignals ist dem Transformator TR1 in der Halteschaltung ein analoges aktives Filter nachgeschaltet. Das Filter ist mit einem Vierfach-Operationsverstärker IC3 in vier aktiven Stufen aufgebaut. Der Eingangsverstärker mit dem Kondensator C13 und den Widerständen R31 und R32 wirkt als Hochpaß, die nachfolgende Stufe mit den Widerständen R33 bis R36 und den Kondensatoren C16, C17 arbeitet als selektives Filter mit Mehrfachgegenkopplung. Dem nachfolgenden Tiefpaß mit den Widerständen R37, R38 und dem Kondensator C17 folgt ein weiteres selektives Filter mit den Widerständen R39 bis R42 und den Kondensatoren C18, C19. Das erste selektive Filter ist auf die Frequenz von 950 Hz, das zweite selektive Filter auf die Frequenz von 1150 Hz abgestimmt, so daß sich eine Mittenfrequenz von 1100 Hz bei ausreichender Bandbreite ergibt. Der Operationsverstärker IC3 arbeitet mit einer Betriebsspannung von + 24 V, wobei ein Spannungsteiler aus den Widerständen R29 und R30 mit einem Kondensator C14 die Mittenspannung von + 12 V erzeugt. Am Ausgang des Filters liegt das Signal über eine Z-Diode D15 und Widerstände R53 und R54 an der Basis eines Transistors T9. Am Kollektorwiderstand R 52 des Transistors T9 entsteht eine Rechteckspannung mit der Amplitude von 5 V und der Frequenz des anliegenden Signals. Die weitere Erkennung der Frequenz übernimmt der Mikrocomputer IC4. Die Empfindlichkeit des Filters ist so eingestellt, daß der Mikrocomputer Signale mit dem Pegel von - 52 db noch sicher erkennt.

### 10. Sprachbaustein

Der Sprachbaustein IC5 enthält die verschiedenen Ansagetexte. Die Texte sind digital in dem Sprachbaustein IC5 fest programmiert und werden vom Mikrocomputer IC4 abgerufen, durch einen Verstärker aus einem Transistor T8, Widerständen R46, R47, R50 und einem Kondensator C26 verstärkt und über einen Kondensator C20 und den Transformator TR1 in die Amtsleitung eingespeist.

### Funktionsbeschreibung

Im Ruhezustand, wenn der Amtsanschluß La, Lb nicht belegt ist, überwacht der Telefax-Telefon-Umschalter den Amtsanschluß auf ankommende Rufsignale. Die angeschlossenen Endgeräte sind von den Amtsleitungen La, Lb abgetrennt und werden mittels der internen Stromspeisung auf ihre Betriebszustände überwacht.

Für das Zustandekommen einer ankommenden Telefax-Verbindung muß das Telefax-Gerät eingeschaltet und auf automatischen Empfang eingestellt sein. Der Telefon-Anschluß darf nicht bereits durch eine Telefon-Verbindung belegt sein.

Bei ankommendem Rufsignal belegt der Umschalter nach Ablauf des ersten Ruftones den Amtsanschluß und überprüft die Amtsleitung La, Lb auf das Telefax-Erkennungssignal CNG. Wird dieses CNG-Signal erkannt, so sendet der Umschalter Rufsignale zum Telefax-Gerät. Durch diese wird das Telefax-Gerät eingeschaltet. Nach dem Anlaufen des Telefax-Gerätes wird die Verbindung von der Amtsleitung La, Lb zum Telefax-Gerät durchgeschaltet. Nach Ende der Telefax-Übertragung schaltet der Umschalter wieder den Ruhezustand ein.

Moderne Telefax-Geräte senden das CNG-Signal im Vier-Sekunden-Takt. Dementsprechend wird durch den Umschalter bei ankommendem Ruf in den ersten vier Sekunden nach dem ersten Rufsignal die Verbindung auf das CNG-Signal überprüft. Wird in diesen vier Sekunden kein CNG-Signal festgestellt, so wird der ankommende Ruf als Telefon-Verbindung gedeutet. Der Umschalter sendet Rufsignale an das angeschlossene Telefon und sendet gleichzeitig an den anrufenden Teilnehmer einen Rufton oder einen Ansagetext, z.B. "bitte warten, Sie werden verbunden". In den Zwischenpausen überwacht der Umschalter weiterhin die Amtsleitung auf das CNG-Signal und schaltet den internen Ruf auf das Telefax-Gerät um, falls ein CNG-Signal doch noch erscheint.

Bei ankommenden Verbindungen von Telefax-Geräten, welche kein CNG-Signal senden, wird die ankommende Verbindung nach Ablauf der Vier-Sekunden-Überprüfungszeit als Telefon-Verbindung gedeutet und an das Telefon durchgeschaltet. Der Empfang am Telefax-Gerät muß dann manuell oder durch eine Prozedur am Telefon gestartet werden. Das Absenden einer Telefax-Übermittlung erfolgt in üblicher Weise über das Telefon 1. Es darf hierzu lediglich nicht das Telefon 2 bereits belegt sein.

Bei einer ankommenden Telefonverbindung übernimmt, wie oben beschrieben, bei ankommendem Ruf der Umschalter zunächst nach dem ersten Rufsignal die Verbindung und überprüft diese innerhalb von vier Sekunden auf das Erscheinen des Telefax--Erkennungssignals. Da dieses CNG-Signal bei einer Telefonverbindung nicht erscheint, signalisiert der Umschalter nach vier Sekunden den Ruf zum Telefon 1 und Telefon 2. Gleichzeitig sendet der Umschalter an den anrufenden Teilnehmer den im Sprachbaustein gespeicherten Ansagetext "bitte warten, Sie werden verbunden" oder den Freiton. Beim Abnehmen des Hörers an Telefon 1 oder Telefon 2 schaltet der automatische Mehrfach-Schalter zu diesem Telefon durch.

Wird kein Telefonhörer abgenommen, schaltet der Umschalter nach einer durch den Codierschalter vorgebbaren Anzahl von Rufsignalen die Verbindung ab. Dabei kann vor dem Auslösen der Verbindung an den anrufenden Teilnehmer eine gespeicherte Textansage gesendet werden, z.B. "der Angerufene meldet sich nicht". Während der Verbindung an Telefon 1 oder Telefon 2 sind das jeweils andere Telefon und das Telefax-Gerät nicht betriebsbereit und vom Amt getrennt.

Um auch bei Abwesenheit Telefax-Übermittlungen empfangen zu können, die nicht durch ein CNG-Signal erkennbar sind, besteht auch die Möglichkeit, eine Betriebsart einzustellen, bei welcher nach einer programmierbaren Anzahl von Rufsignalen am Telefon der Umschalter auf das Telefax-Gerät umschaltet und dem anrufenden Teilnehmer eine entsprechende gespeicherte Textansage sendet, z.B. "bitte starten Sie Ihr Faxgerät".

Eine abgehende Telefonverbindung kann von Telefon 1 oder Telefon 2 in gewohnter Weise nach Ertönen des Amtstones aufgebaut werden. Wenn die Amtsleitung schon durch das andere Telefon oder durch das Telefax-Gerät belegt ist, ertönt nach dem Abnehmen des Hörers ein Besetztton, der von dem Telefax-Telefon-Umschalter eingespeist wird.

Durch den automatischen Mehrfach-Schalter kann eine bestehende Telefonverbindung von einem Telefon auf das andere Telefon weitergegeben werden. Hierzu muß der Hörer des jeweils anderen Telefons abgenommen sein, bevor der Hörer aufgelegt wird. Die Verbindung kann dann am anderen Telefon weitergeführt werden.

## Patentansprüche

1. Umschalter für einen Telefonanschluß, der umschaltbar ein Telefax-Gerät und ein Telefon an die Amtsleitung La, Lb schaltet, gekennzeichnet durch
- eine Ruferkennung, die das Rufsignal einer ankommenden Verbindung feststellt,
- eine Halteschaltung, die auf das erste Rufsignal einer ankommenden Verbindung in die Amtsleitung La, Lb eingeschaltet wird und die Verbindung für eine vorgegebene Zeitspanne aufrechterhält,
- eine Telefax-Signal-Erkennung, die die ankommende Verbindung während dieser Zeitspanne auf das Erscheinen eines Telefax-Erkennungssignals überprüft,
- ein Koppelfeld, das gesteuert umschaltbar eine interne Rufwechselspannung an das Telefax-Gerät schaltet, wenn ein Telefax-Erkennungssignal erkannt wird, und die interne Rufwechselspannung an das Telefon schaltet, wenn in der vorgegebenen Zeitspanne kein Telefax-Erkennungssignal erkannt wird, und
- einen Mikrocomputer, der Signale von der Ruferkennung und der Telefax-Signalerkennung erhält und das Koppelfeld entsprechend diesen Signalen nach einer vorgegebenen Programmierung steuert.

2. Umschalter nach Anspruch 1, dadurch gekennzeichnet, daß die Telefax-Signalerkennung das von dem Sender-Telefax-Gerät ausgesandte CNG-Signal erkennt.

3. Umschalter nach Anspruch 2, dadurch gekennzeichnet, daß die Telefax-Signalerkennung ein Filter aufweist, welches selektiv die Frequenz des CNG-Signals (1100 Hz) verstärkt.

4. Umschalter nach einem der vorhergehenden Ansprüche, dadurch gekennzeichnet, daß die Halteschaltung einen Gleichstromweg und einen Wechselstromweg aufweist, die parallel zueinander an die Amtsleitung La, Lb geschaltet werden.

5. Umschalter nach den Ansprüchen 3 und 4, dadurch gekennzeichnet, daß das Filter der Telefax-Signalerkennung an den Wechselstromweg der Halteschaltung gekoppelt ist.

6. Umschalter nach einem der vorhergehenden Ansprüche, dadurch gekennzeichnet, daß eine Schleifenstromerkennung (S1) in die Amtsleitung La, Lb vor der Halteschaltung geschaltet ist, die an den Mikrocomputer ein Signal zur Überprüfung der Verbindung gibt.

7. Umschalter nach einem der vorhergehenden Ansprüche, dadurch gekennzeichnet, daß eine Schleifenstromerkennung (S2) in den Stromweg der Rufwechselspannung geschaltet ist, die an den Mikrocomputer ein Signal gibt, wenn die angeschalteten Geräte (Telefon-, Telefaxgerät) Schleife bilden, während die Rufwechselspannung anliegt.

8. Umschalter nach einem der vorhergehenden Ansprüche, dadurch gekennzeichnet, daß dem angeschlossenen Telefon/den angeschlossenen Telefonen eine Schleifenstromerkennung (S3) zugeordnet ist, die an den Mikrocomputer ein Signal gibt, wenn eines der Telefone Schleife bildet.

9. Umschalter nach einem der vorhergehenden Ansprüche, dadurch gekennzeichnet, daß dem Telefax-Gerät eine Schleifenstromerkennung (S4) zugeordnet ist, die an den Mikrocomputer ein Signal gibt, wenn das Telefax-Gerät Schleife bildet.

10. Umschalter nach einem der vorhergehenden Ansprüche, dadurch gekennzeichnet, daß ein automatischer Mehrfach-Schalter (AMS) vorgesehen ist, der das wahlweise Anschalten mehrerer Telefone und/oder sonstiger Endgeräte ermöglicht.

11. Umschalter nach einem der vorhergehenden Ansprüche, dadurch gekennzeichnet, daß das Koppelfeld Relais (K2 bis K6) aufweist, die von dem Mikrocomputer gesteuert die angeschlossenen Telefone und das Telefax-Gerät mit der Amtsleitung La, Lb verbinden.

12. Umschalter nach Anspruch 11, dadurch gekennzeichnet, daß die Relais (K2 bis K6) von dem Mikrocomputer über einen Relaistreiber gesteuert werden.

13. Umschalter nach einem der vorhergehenden Ansprüche, dadurch gekennzeichnet, daß das Koppelfeld die angeschlossenen Telefone und das Telefax-Gerät im Ruhezustand an eine interne Speisespannung und bei der Signaliserung an die interne Rufwechselspannung schaltet.

14. Umschalter nach einem der vorhergehenden Ansprüche, dadurch gekennzeichnet, daß ein Sprachbaustein vorgesehen ist, der Tonsignale oder Ansagetexte während der Zeitspanne in die Amtsleitung La, Lb einspeist, während der die Halteschaltung die ankommende Verbindung aufrechterhält.

15. Umschalter nach einem der vorhergehenden Ansprüche, dadurch gekennzeichnet, daß eine Stromversorgung vorgesehen ist, die an ein externes Stromnetz anschließbar ist und die Speisespannung für die Schaltung und den Mikrocomputer liefert.

16. Umschalter nach Anspruch 15, dadurch gekennzeichnet, daß die von der Stromversorgung erzeugte Speisespannung (+24 V) im Ruhebetrieb, wenn alle Telefone aufgelegt sind und das Telefax-Gerät nicht aktiv ist, an alle Geräte geschaltet ist und daß die interne Rufwechselspannung dieser Speisespannung im Koppelfeld überlagert wird.
